# NEUE EUROPÄISCHE PATENTSCHRIFT

(11) **EP 3 454 975 B2**
(45) Veröffentlichungstag und Bekanntmachung des Hinweises auf die Entscheidung über den Einspruch: **26.07.2023**
(45) Hinweis auf die Patenterteilung: 04.11.2020
(21) Anmeldenummer: 17721060.6
(22) Anmeldetag: 13.04.2017
(51) Int. Cl.: B01D 53/86, C01B 21/38

(54) **VERFAHREN ZUR VERMINDERUNG DER NOX-ABGASKONZENTRATION IN EINER ANLAGE ZUR HERSTELLUNG VON SALPETERSÄURE BEIM AB- UND/ODER ANFAHREN DER ANLAGE**
METHOD FOR REDUCING THE WASTE GAS CONCENTRATION OF NOX IN A PLANT FOR PRODUCING NITRIC ACID AS SAID PLANT IS STARTED UP AND/OR SHUT DOWN
PROCÉDÉ POUR RÉDUIRE LA CONCENTRATION EN NOX DES EFFLUENTS GAZEUX ISSUS D'UNE INSTALLATION DE PRODUCTION D'ACIDE NITRIQUE LORS DE L'ARRÊT ET/OU DE LA MISE EN MARCHE DE L'INSTALLATION

(30) Priorität: 22.04.2016 DE 102016206872
(43) Veröffentlichungstag der Anmeldung: 20.03.2019
(73) Patentinhaber: thyssenkrupp Industrial Solutions AG, 45143 Essen (DE); thyssenkrupp AG, 45143 Essen (DE)
(72) Erfinder: RUTHARDT, Klaus, 44265 Dortmund (DE); GROVES, Michael, 58285 Gevelsberg (DE); KERN, Paul, 44147 Dortmund (DE)
(74) Vertreter: Gulde & Partner
(86) Internationale Anmeldenummer: PCT/EP2017/058943
(87) Internationale Veröffentlichungsnummer: WO 2017/182387

(56) Entgegenhaltungen:
- EP-A2- 0 163 001
- DE-A1-102013 004 341
- US-A- 3 402 015
- CONNOCK L: "Tackling global warming", NITROGEN + SYNGAS, BRITISH SULPHUR PUBLISHING, LONDON, GB, Nr. 295, 1. September 2008 (2008-09-01), Seiten 29-38,40, XP001520983, ISSN: 1750-6891

## Beschreibung

Die vorliegende Erfindung betrifft ein Verfahren zur Verminderung der Konzentration von NOₓ-Stickoxiden in Restgas, welches während des Ab- und/oder Anfahrens einer Anlage zur Herstellung von Salpetersäure anfällt, gemäß Anspruch 1.

Zur Herstellung von Salpetersäure wird üblicherweise Ammoniak (NH₃) mit Luftsauerstoff katalytisch oxidiert. Hierbei entsteht NO, das mit Sauerstoff zu NO₂ oxidiert und anschließend mit H₂O in einer Absorptionskolonne unter Bildung von HNO₃ absorbiert wird. NO und NO₂ werden als nitrose Gase oder auch als NOₓ-Stickoxide bezeichnet. Moderne Anlagen zur Herstellung von Salpetersäure werden unter Druck betrieben, um höhere Säurekonzentrationen und damit bessere Wirkungsgrade in der Absorption und höhere Abbauraten an NOₓ-Stickoxiden im Restgas zu erreichen.

Es werden Zweidruck- und Monodruckanlagen unterschieden. Bei Zweidruckanlagen erfolgt die Produktion der NOₓ-Stickoxide durch die Oxidation von Ammoniak bei einem Druck von etwa 4•10⁵ bis 6•10⁵ Pa (4 bis 6 bar) und die Absorption der so erzeugten NOₓ-Stickoxide mit Wasser zu Salpetersäure bei 1•10⁶ bis 1,5•10⁶ Pa (10 bis 15 bar). Bei Monodruckanlagen dagegen erfolgen die Gaserzeugung und die Absorption bei annähernd gleichem Druck von etwa 6•10⁵ bis 1,4•10⁶ Pa (6 bis 14 bar). Zur Druckerzeugung dienen Verdichter, die mittels Gas- und/oder Dampfturbine bzw. Elektromotor angetrieben werden.

Moderne Anlagen zur Herstellung von Salpetersäure, wie z.B. in der DE102013004341 beschrieben, sind mit Restgasreinigungsanlagen ausgerüstet, um die Konzentration der NOₓ-Stickoxide im Restgas zu verringern. Anschließend wird das Restgas mit einer verringerten Konzentration an NOₓ-Stickoxiden als Abgas an die Umgebung abgegeben. Dabei werden die NOₓ-Stickoxide, also NO und NO₂, üblicherweise in den Restgasreinigungsanlagen durch SCR (*Selective Catalytic* Reduction)-Verfahren unter Zufuhr geeigneter Reduktionsmittel, wie z.B. Ammoniak, an geeigneten SCR-Katalysatoren, wie z.B. V₂O₅/TiO₂-basierten DeNOx-Katalysatoren, reduziert. Der relative Anteil von NO₂ bezogen auf die molare Gesamtmenge an NOₓ im Restgas wird durch den Oxidationsgrad des NOₓ charakterisiert. Eine Weiterentwicklung der SCR-Technologie im Bereich der Salpetersäuretechnologie ist das EnviNOx^{®}-Verfahren, bei dem NOₓ-Stickoxide durch Zufuhr geeigneter Reduktionsmittel besonders wirksam reduziert werden und NOₓ im Abgas in vielen Fällen praktisch nicht mehr nachweisbar ist. Zusätzlich wird dabei N₂O ebenfalls reduziert oder katalytisch zersetzt.

Die Konzentrationen der NOₓ-Stickoxid-Emissionen dürfen gemäß behördlicher Auflagen einen maximalen Grenzwert nicht überschreiten. Derzeit ist ein Wert von 50 ppm ein üblicher Grenzwert, es ist aber zu erwarten, dass dieser zukünftig verringert wird.

Im Unterschied zum stationären Betrieb der Anlagen zur Herstellung von Salpetersäure ist es während des Ab- und/oder Anfahrens bzw. beim Ausfall der Anlage derzeit jedoch nicht oder nur eingeschränkt möglich, zeitlich begrenzte Emissionen von NOₓ-Stickoxiden zu vermeiden, welche die Grenzwerte deutlich überschreiten.

Beim Ausfall bzw. beim Abfahren der Anlage zur Herstellung von Salpetersäure werden die in der Anlage unter Druck befindlichen NOₓ-Stickoxide üblicherweise über die Absorptionskolonne und die Restgasreinigungsanlage in die Umgebung entspannt. Die Restgasreinigungsanlage kann jedoch nur bis zu einer bestimmten zulässigen Grenztemperatur in Betrieb gehalten werden, unterhalb derer sie außer Betrieb genommen werden muss. Restgasreinigungssysteme, bei denen NH₃ als Reduktionsmittel für die NOₓ-Stickoxide eingesetzt wird, können nämlich erst ab einer minimalen Grenztemperatur dauerhaft in Betrieb genommen werden, um die unerwünschte Bildung und Akkumulation von NH₄NO₃ auf dem SCR-Katalysator zu vermeiden. Diese Grenztemperatur liegt häufig im Bereich von 170 bis 200°C. Im stationären Betrieb erreichen Anlagen zur Herstellung von Salpetersäure typischerweise Betriebstemperaturen von ca. 300°C bis ca. 600°C, wobei die Restgasreinigungsanlage ohne unerwünschte Bildung und Akkumulation von NH₄NO₃ betrieben werden kann.

In der Regel muss das Ausschalten der Restgasreinigungsanlage vor der vollständigen Entspannung der Anlage erfolgen, weshalb die Konzentration der NOₓ-Stickoxide im an die Umgebung abzugebenden Restgas stark zunimmt. Ein weiterer Anstieg der NOₓ-Stickoxid-Emissionen entsteht dadurch, dass die üblicherweise mit Siebboden ausgestattete Absorptionskolonne mit zunehmender Entspannung der Anlage instabil wird, so dass der Absorptionswirkungsgrad stark abfällt. Sobald die Restgasreinigungsanlage außer Betrieb ist, wird während der Restentspannung die Konzentration an NOₓ-Stickoxiden-Emissionen stark zunehmen.

Beim Ausfall bzw. Abfahren einer Anlage zur Herstellung von Salpetersäure wird üblicherweise zuerst die Ammoniakzuführung zur Gaserzeugung abgesperrt, bevor der Maschinensatz der Anlage abgestellt wird. Solange die Restgasreinigungsanlage unter Beachtung der Grenztemperaturen in Betrieb gehalten werden kann, wird das an die Umgebung abzugebende Restgas die Konzentration an NOₓ-Stickoxiden nicht überschreiten und das Restgas wird farblos sein. Vorteilhaft ist es dabei, den Maschinensatz solange wie möglich in Betrieb zu halten, bis die NOₓ-Stickoxide in der Anlage zur Herstellung von Salpetersäure durch Luft ersetzt sind. Wenn jedoch eine Abschaltung des Maschinensatzes unmittelbar oder kurz nach dem Abstellen der Ammoniakzuführung erforderlich ist, ist ein solcher Gasaustausch nicht mehr gegeben. Bei weiterer Entspannung und dadurch bedingtem zwangsläufigem Erreichen der Grenztemperatur für die Restgasreinigungsanlage und den dadurch bedingten Ausfall der Restgasreinigungsanlage treten deutlich höhere Emissionen von NOₓ-Stickoxiden auf.

Aufgrund des thermodynamischen Gleichgewichts liegen die NOₓ-Stickoxide mit Abkühlung der Betriebstemperatur überwiegend in Form von NO₂ vor, weshalb diese im Restgas, das an die Umgebung abgegeben wird, als braunes Gas sichtbar werden.

Auch beim Anfahren der Anlage wird der Grenzwert der Konzentration an NOₓ-Stickoxiden im an die Umgebung abgegebenen Restgas überschritten. Ein Teil dieses Restgases sind Gase, welche beim Stillstand der Anlage in den Rohrleitungen und Apparaten verblieben sind oder sich darin gebildet haben. Ein weiterer Teil resultiert aus NOₓ-Ausgasungen aus ungebleichter Salpetersäure (enthält gelöstes NOₓ), mit der üblicherweise beim Wiederanfahren der Anlage die Absorptionskolonne befüllt wird.

Ein Verfahren zur Verminderung der Konzentration an NOₓ-Stickoxiden in Restgasen während des Ab- und/oder Anfahrens einer unter Druck betriebenen Anlage zur Herstellung von Salpetersäure, deren austretendes Restgas in einer Restgasreinigungsanlage behandelt wird, wird in DE 102 11 964 vorgeschlagen. Dabei wird beim Abfahren der Anlage, unmittelbar nach dem Ausfall der Restgasreinigungsanlage, der innerhalb der Anlage herrschende Druck aufrecht erhalten und das Restgas anschließend geregelt entspannt. Mittels von außen eingespeister Luft wird das Restgas verdünnt und an die Umgebung abgegeben. Durch diese Maßnahme kann eine geregelte Abgabe von Restgasen an die Umgebung erreicht werden, deren Gehalt an NOₓ-Stickoxiden in ausreichender Verdünnung vorliegt, so dass die Konzentration der NOₓ-Stickoxide im nicht-sichtbaren Bereich liegt. Allerdings wird der Gehalt an NOₓ-Stickoxiden im Restgas durch diese Maßnahme nicht verringert, da ein Abbau der NOₓ-Stickoxide in der Restgasreinigungsanlage nicht mehr möglich ist.

DE 10 2011 1212 142 offenbart ein Verfahren und eine Vorrichtung zur Herstellung von Salpetersäure. Das Verfahren bzw. die Vorrichtung sind dadurch gekennzeichnet, dass zumindest während des Anfahrens und/oder des Abfahrens der Salpetersäureanlage in der Restgasturbine ein Teilstrom des die Restgasturbine durchströmenden Mediums entnommen wird und/oder dass vor der Restgasturbine ein Teilstrom des der Restgasturbine zugeführten Mediums entnommen wird und einem Kamin zugeführt wird.

DE 10 2012 000 569 A1 offenbart ein Verfahren zum farblosen An- und Abfahren von Salpetersäureanlagen mit den eingangs genannten Merkmalen. Dabei wird beim Anfahren und/oder beim Abfahren der Salpetersäureanlage unter Druck stehendes erhitztes Fluid in die Salpetersäureanlage eingespeist, um die Geschwindigkeit des Temperaturabfalls des durch die Salpetersäureanlage strömenden Gases beim Abfahren der Anlage zu verringern oder um die Geschwindigkeit des Temperaturanstiegs des durch die Salpetersäureanlage strömenden Gases beim Anfahren der Anlage zu vergrößern.

DE 10 2012 000 570 A1 offenbart ein Verfahren und eine Vorrichtung zur Herstellung von Salpetersäure, dadurch gekennzeichnet, dass die Restgasturbine von einem Restgas durchströmt wird, das durch Wärmetausch mit einem erhitzten Fluid, welches mindestens einen Prozessgaskühler und/oder mindestens einen Speisewasservorwärmer durchströmt hat, erhitzt worden ist.

DE 10 2012 010 017 A1 offenbart ein Verfahren zur Verminderung der Stickoxid-Abgaskonzentration in einer Salpetersäureanlage beim Ab- und/oder Anfahren sowie dafür geeignete Salpetersäureanlagen. Das Verfahren ist dadurch gekennzeichnet, dass beim Anfahren und/oder beim Abfahren der Salpetersäureanlage unter Druck stehendes, Stickoxide enthaltendes Abgas aus der Salpetersäureanlage sowie gasförmiges Reduktionsmittel für die Stickoxide in einen mit Katalysator befüllten Reaktor geleitet werden, der zusätzlich zum Reaktor der Restgasreinigung vorgesehen ist.

Die Verfahren und die Vorrichtungen einer unter Druck betriebenen Anlage zur Herstellung von Salpetersäure beim Ab- und/oder Anfahren der Anlage sind jedoch nicht in jeder Hinsicht zufriedenstellend und es besteht ein Bedarf an verbesserten Verfahren und Vorrichtungen.

Es ist eine Aufgabe der Erfindung, die Konzentration an NOₓ-Stickoxiden in dem an die Umgebung abgegebenen Restgas zu verringern, welches beim Ab- und/oder Anfahren von Anlagen zur Herstellung von Salpetersäure anfällt, wobei der Ausfall der Restgasreinigungsanlage vermieden werden soll. Die Konzentration an NOₓ-Stickoxiden im an die Umgebung abgegebenen Restgas soll dabei unterhalb der sichtbaren Grenze liegen.

Diese Aufgabe wird durch den Gegenstand der Patentansprüche gelöst.

Ein erster Aspekt der Erfindung betrifft ein Verfahren zur Verminderung der Konzentration von NOₓ-Stickoxiden in Restgas, welches während des Ab- und/oder Anfahrens einer Anlage zur Herstellung von Salpetersäure anfällt, wobei das Verfahren folgende Schritte umfasst:
(a) Temperieren des Restgases während des Ab- und/oder Anfahrens der Anlage zur Herstellung von Salpetersäure mit einer Temperiervorrichtung; und
(b) Behandeln des in Schritt (a) temperierten Restgases in einer Restgasreinigungsanlage, wobei die Temperiervorrichtung ein Wärmetauscher oder ein Wärmespeicher ist und wobei das Restgas in einem Kreislauf geführt wird und dabei die Temperiervorrichtung und die Restgasreinigungsanlage durchströmt.

Der erfindungsgemäße Wärmetauscher bzw. Wärmespeicher ist hinsichtlich seines Aufbaus erfindungsgemäß nicht eingeschränkt. Geeignete Wärmetauscher umfassen Rohrbündelwärmetauscher, Plattenwärmetauscher, Spiralwärmetauscher, U-Rohr-Wärmetauscher, Mantelrohrwärmetauscher, etc. Geeignete Wärmespeicher umfassen grundsätzlich alle Bauelemente, welche eine vergleichsweise große Wärmekapazität aufweisen und Wärme aus Gasen aufnehmen und diese Wärme wieder an Gase abgeben können. Geeignete Wärmetauscher und Wärmespeicher sind einem Fachmann bekannt.

Bevorzugt wird das Verfahren zur Verminderung der Konzentration an NOₓ-Stickoxiden im Restgas in einer unter Druck betriebenen Anlage zur Herstellung von Salpetersäure durchgeführt. Zur Druckerzeugung dienen bevorzugt Verdichter, die mittels Gas- und/oder Dampfturbine bzw. Elektromotor angetrieben werden. Eine Gasturbine wird dabei vorzugsweise mit dem Abgas der Anlage zur Herstellung von Salpetersäure unter Nutzung des von wenigstens einem Verdichter aufgebrachten Drucks betrieben.

Ein Fachmann kann den Zustand einer Anlage zur Herstellung von Salpetersäure während ihres Ab- und/oder Anfahrens vom Zustand der Anlage während ihres stationären Betriebs unterscheiden. Das Abfahren der Anlage schließt sich dem stationären Betrieb an, das Anfahren der Anlage geht dem stationären Betrieb voraus.

In Schritt (a) des erfindungsgemäßen Verfahrens wird das Restgas während des Ab- und/oder Anfahrens der Anlage zur Herstellung von Salpetersäure mit einer Temperiervorrichtung temperiert. Unter Temperieren versteht ein Fachmann das Einstellen der Temperatur, im erfindungsgemäßen Verfahren das Einstellen der Temperatur des Restgases. Dabei wird Energie auf das Restgas übertragen, bevorzugt in Form von Wärme.

In einer bevorzugten Ausführungsform erfolgt das Temperieren über die gesamte Dauer des Ab- und/oder Anfahrens der Anlage zur Herstellung von Salpetersäure, kann aber auch nur zeitweise erfolgen. Das Temperieren des Restgases kann auch, muss aber nicht, im stationären Betrieb, welcher den Teil-, Voll- und Überlastfall umfasst, erfolgen. In einer bevorzugten Ausführungsform ist das erfindungsgemäße Verfahren sowohl im stationären Betrieb als auch im Teillastbetrieb der Anlage zur Herstellung von Salpetersäure durchführbar. Der Teillastbetrieb der Anlage zur Herstellung von Salpetersäure bezeichnet den Zustand der Anlage, bei der diese stetig unterhalb ihrer maximal möglichen Kapazität betrieben wird.

Beispielsweise kann das Temperieren des Restgases erst dann oder kurz vor dem Zeitpunkt einsetzen, sobald die Temperatur des Restgases beim Abfahren der Anlage zur Herstellung von Salpetersäure den unteren Grenzwert der Betriebstemperatur der Restgasreinigungsanlage erreicht und/oder so lange die Temperatur des Restgases beim Anfahren der Anlage zur Herstellung von Salpetersäure den unteren Grenzwert der Betriebstemperatur der Restgasreinigungsanlage noch nicht erreicht hat. Der Beginn des Abfahrens der Anlage zur Herstellung von Salpetersäure und der Beginn des Temperierens mit Hilfe der Temperiervorrichtung müssen zeitlich nicht übereinstimmen.

Der Zeitraum des Ab- und/oder Anfahrens der Anlage kann, muss aber nicht, charakterisiert sein durch eine Abnahme bzw. einen Anstieg des Drucks innerhalb der Anlage zur Herstellung von Salpetersäure. Beispielsweise wird das Restgas beim Abfahren der Anlage zur Herstellung von Salpetersäure so lange mit Hilfe der Restgasreinigungsanlage temperiert, bis innerhalb der Anlage zur Herstellung von Salpetersäure der Umgebungsdruck herrscht.

In einer anderen bevorzugten Ausführungsform wird das Restgas auch nach Erreichen und/oder vor Verlassen des Umgebungsdrucks, also im entspannten Zustand der Anlage zur Herstellung von Salpetersäure, mit Hilfe der Temperiervorrichtung temperiert.

Bevorzugt erfolgt das Temperieren des Restgases in Abhängigkeit von dessen Temperatur. In einer anderen bevorzugten Ausführungsform wird das Restgas temperiert, sobald die Ammoniakzuführung zur Erzeugung der NOₓ-Stickoxide beim Abfahren der Anlage abgesperrt bzw. beim Anfahren der Anlage geöffnet ist.

Bevorzugt wird das Restgas derart temperiert, dass ein möglichst langer Betrieb der Restgasreinigungsanlage nach Abfahren bzw. ein möglichst früher Betrieb der Restgasreinigungsanlage beim Anfahren der Anlage zur Herstellung von Salpetersäure ermöglicht wird.

Bevorzugt wird das Restgas in Schritt (a) auf eine Temperatur im Bereich von 300 bis 550°C temperiert.

Bevorzugt wird das Restgas in Schritt (a) auf eine Temperatur im Bereich von 200°C bis 550°C temperiert, bevorzugter im Bereich von 300°C bis 480°C und am bevorzugtesten im Bereich von 260°C bis 380°C.

Bevorzugt wird das Restgas in Schritt (a) auf mindestens 300°C temperiert, bevorzugter mindestens 325°C, noch bevorzugter mindestens 350°C, am bevorzugtesten mindestens 375°C und insbesondere mindestens 400°C.

Bevorzugt wird das Restgas in Schritt (a) auf höchstens 550°C temperiert, bevorzugter höchstens 525°C, noch bevorzugter höchstens 500°C, am bevorzugtesten höchstens 475°C und insbesondere höchstens 450°C.

Zum Temperieren des Restgases werden Wärmetauscher und/oder Wärmespeicher eingesetzt.

In einer nicht erfindungsgemäßen Ausführungsform wird die Temperiervorrichtung elektrisch betrieben und/oder umfasst die Temperiervorrichtung einen Brenner.

Wird die Temperiervorrichtung elektrisch betrieben, kann sie beispielsweise mit elektrisch betriebenen Heizelementen ausgestattet sein. Entsprechende Mittel zum Betreiben einer elektrischen Temperiervorrichtung sind einem Fachmann bekannt.

Umfasst die Temperiervorrichtung einen Brenner, wird in dem Brenner bevorzugt ein Brennstoff umgesetzt, wodurch Wärme erzeugt wird, mit deren Hilfe das Restgas temperiert werden kann.

In einer bevorzugten Ausführungsform werden mit Hilfe des Brenners Leitungen erwärmt, durch welche das Restgas strömt. Auf diese Weise können zumindest Teile des Restgases temperiert werden.

In einer nicht erfindungsgemäßen Ausführungsform wird zumindest ein Teil des Restgases mit zumindest einem Teil der Abgase des Brenners vermischt, wodurch das Restgas temperiert werden kann. Ist die Restsauerstoffkonzentration im Restgas ausreichend hoch, ist es ebenso möglich, dass zumindest ein Teil des Restgases mit einem Brennstoff vermischt wird und in dem Brenner umgesetzt wird. Das dabei gebildete, erwärmte Abgas kann anschließend oder auch bereits während der Umsetzung in dem Brenner mit dem Restgas vermischt werden. Auf diese Weise kann das Restgas temperiert werden.

In Schritt (b) des erfindungsgemäßen Verfahrens wird das in Schritt (a) temperierte Restgas in einer Restgasreinigungsanlage behandelt.

Das Restgas wird bevorzugt in der Restgasreinigungsanlage behandelt, um die Konzentration an NOₓ-Stickoxiden im Restgas zu verringern. Restgasreinigungsanlagen sind einem Fachmann bekannt und ermöglichen eine Reduktion der NOₓ-Stickoxide NO und NO₂ üblicherweise durch SCR-Verfahren unter Zufuhr geeigneter Reduktionsmittel. Darüber hinaus ermöglichen sie bevorzugt eine katalytische Reduktion oder Zersetzung von N₂O.

Die Restgasreinigungsanlage ist bevorzugt mit Katalysatoren zum Abbau von NOₓ-Stickoxiden beschickt (DeNOₓ-Katalysatoren). Diese Katalysatoren sind dem Fachmann bekannt. In der Regel handelt es sich dabei um Übergangsmetall-Katalysatoren, welche die chemische Umsetzung von NOₓ-Stickoxiden mit Reduktionsmitteln fördern. Bevorzugt sind klassische DeN-Oₓ-Katalysatoren, insbesondere solche enthaltend Übergangsmetalle und/oder Übergangsmetalloxide, wie z.B. Eisen-, Nickel-, Kupfer-, Cobalt-, Mangan-, Rhodium-, Rhenium- oder Vanadiumoxide oder metallisches Platin, Gold oder Palladium sowie Mischungen von zwei oder mehreren dieser Verbindungen. Besonders bevorzugt werden Katalysatoren auf V₂O₅-TiO₂-Basis.

Erfindungsgemäß verwendete Katalysatoren enthalten üblicherweise weitere dem Fachmann bekannte Zusatzstoffe, wie z.B. Bindemittel, beispielsweise Alumosilikate oder Böhmit.

Der Katalysator kann als Formkörper beliebiger Größe und Geometrie vorliegen, bevorzugt in Geometrien, die ein größeres Verhältnis von Oberfläche zu Volumen aufweisen und bei deren Durchströmen ein möglichst geringer Druckverlust erzeugt wird.

Neben den DeNOₓ-Katalysatoren, welche die chemische Umsetzung der NOₓ-Stickoxide mit Reduktionsmitteln katalysieren, kann die Restgasreinigungsanlage auch noch Katalysatoren enthalten, welche die chemische Zersetzung von N₂O in Stickstoff und Sauerstoff oder die chemische Reduktion von N₂O mit Reduktionsmitteln fördern. Diese Katalysatoren sind einem Fachmann bekannt.

In die Restgasreinigungsanlage werden neben dem Restgas, das NOₓ-Stickoxide enthält, auch Reduktionsmittel für Stickoxide, insbesondere Reduktionsmittel für NOₓ, eingebracht. Als Reduktionsmittel für NOₓ-Stickoxide eignet sich jedweder Stoff, der dem Fachmann bekannt ist und eine hohe Aktivität zur Reduktion von NOₓ aufweist. Dies können beispielsweise Stickstoff enthaltende Reduktionsmittel sein. Als Stickstoff enthaltende Reduktionsmittel können beliebige Verbindungen herangezogen werden, solange diese zur Reduktion von NOₓ geeignet sind. Beispiele sind Azane, Hydroxylderivate von Azanen, sowie Amine, Oxime, Carbamate, Harnstoff oder Harnstoffderivate. Harnstoff und Harnstoffderivate werden vorzugsweise in Form von wässrigen Lösungen eingesetzt.

Besonders bevorzugt wird Ammoniak als Reduktionsmittel für Stickoxide, insbesondere für NOₓ-Stickoxide, eingesetzt.

Zusätzlich zum Reduktionsmittel für NOₓ kann noch ein Reduktionsmittel für N₂O in das zu behandelnde Restgas eingebracht werden. Dabei kann es sich um Stickstoffenthaltende Reduktionsmittel handeln. Beispiele dafür sind weiter oben aufgeführt. Es kann sich aber auch um gasförmige Kohlenwasserstoffe, Kohlenmonoxid oder Wasserstoff handeln. Besonders bevorzugt wird Ammoniak als Reduktionsmittel für N₂O eingesetzt.

Bevorzugt wird das Temperieren des Restgases zum Abbau der Konzentration an NOₓ im Restgas in der Restgasreinigungsanlage genutzt, vorzugsweise während des Ab- und/oder Anfahrens der Anlage zur Herstellung von Salpetersäure. Bevorzugt dient das Temperieren dabei dazu, das Restgas auf eine Temperatur zu erwärmen bzw. das Abkühlen des Restgases unterhalb einer Temperatur zu verhindern bzw. zu verzögern, welche mindestens erforderlich ist, damit die in der Restgasreinigungsanlage zur Verringerung der Konzentration an NOₓ-Stickoxiden stattfindenden chemischen Reaktionen, welche vorzugsweise katalysiert sind, ablaufen können.

In einer bevorzugten Ausführungsform wird die Konzentration an NOₓ-Stickoxiden im Restgas während des Ab- und/oder Anfahrens der Anlage zur Herstellung von Salpetersäure um mindestens 10% verringert, bevorzugter um mindestens 20%, mindestens 30%, mindestens 40%, mindestens 50%, mindestens 60%, mindestens 70%, mindestens 80%, mindestens 90% oder mindestens 99%.

In einer weiteren bevorzugten Ausführungsform wird die Konzentration an N₂O im Restgas um mindestens 10% reduziert, bevorzugter um mindestens 20%, mindestens 30%, mindestens 40%, mindestens 50%, mindestens 60%, mindestens 70%, mindestens 80%, mindestens 90% oder mindestens 99%.

Die benötigten Mengen an Reduktionsmittel sind von der Art des Reduktionsmittels abhängig und können vom Fachmann durch Routineexperimente ermittelt werden.

Das Restgas kann an verschiedenen Stellen im erfindungsgemäßen Verfahren temperiert werden; bevorzugt wird das Restgas vor und/oder nach Durchströmen der Restgasreinigungsanlage temperiert.

Dabei wird das Restgas wenigstens zum Teil oder vollständig in einem Kreislauf geführt und dabei die Temperiervorrichtung und die Restgasreinigungsanlage, bevorzugt zusätzlich auch zunächst die Anlage zur Herstellung von Salpetersäure durchströmt.

Wird das Restgas zeitlich erst nach dem ersten Durchströmen der Restgasreinigungsanlage temperiert, so wird es bevorzugt in einem Kreislauf geführt.

Bevorzugt durchströmt das im Kreislauf geführte Restgas die Temperiervorrichtung und die Restgasreinigungsanlage. In einer anderen bevorzugten Ausführungsform wird das Restgas an geeigneter Stelle in die Anlage zur Herstellung von Salpetersäure rückgeführt. Bevorzugt wird das im Kreislauf geführte Restgas in die Rohrleitung geleitet, die im stationären Betrieb die im Brenner erzeugten NOₓ-Stickoxide zur Absorptionskolonne leitet.

Bevorzugt durchströmt das im Kreislauf geführte Restgas die Temperiervorrichtung, die Restgasreinigungsanlage und die Absorptionskolonne. Temperiervorrichtung, Restgasreinigungsanlage und Absorptionskolonne können im Kreislauf an beliebiger Stelle angeordnet sein. Bevorzugt durchströmt das im Kreislauf geführte Restgas zunächst die Temperiervorrichtung, anschließend die Absorptionskolonne und dann die Restgasreinigungsanlage, bevor es erneut dem Kreislauf zugeführt wird.

Wird das Restgas zeitlich erst nach dem ersten Durchströmen der Restgasreinigungsanlage temperiert, so ist das Restgas beim ersten Durchströmen der Restgasreinigungsanlage bevorzugt nicht temperiert. Erst nach dem vollständigen Durchlaufen des ersten Kreislaufzyklus und dem zweiten Durchströmen der Restgasreinigungsanlage ist das Restgas beim Behandeln in der Restgasreinigungsanlage dann bevorzugt temperiert. In diesem Fall folgt der erfindungsgemäße Schritt (a) bevorzugt zeitlich nach Schritt (b).

Dementsprechend können die Schritte (a) und (b) in alphabetischer Reihenfolge erfolgen, müssen es aber nicht.

Wird das Restgas zeitlich erst nach dem ersten Durchströmen der Restgasreinigungsanlage temperiert, so werden bevorzugt mindestens 10 Vol.-% des Restgases im Kreislauf geführt, bevorzugter mindestens 20 Vol.-%, mindestens 30 Vol.-%, mindestens 40 Vol.-%, mindestens 50 Vol.-%, mindestens 60 Vol.-%, mindestens 70 Vol.-%, mindestens 80 Vol.-%, mindestens 90 Vol.-%, mindestens 99 Vol.-%. Bevorzugt wird das Restgas vollständig im Kreislauf geführt.

Bevorzugt wird das Restgas erst bei Erreichen einer nicht-sichtbaren Konzentration an NOₓ-Stickoxiden im Restgas an die Umgebung abgegeben. Bevorzugt beträgt die Konzentration an NOₓ-Stickoxiden im an die Umgebung abgegebenen Restgas (Abgas) höchstens 100 ppm, bevorzugter höchstens 90 ppm, höchstens 80 ppm, höchstens 70 ppm, höchstens 60 ppm, höchstens 50 ppm, höchstens 40 ppm, höchstens 30 ppm, höchstens 20 ppm oder höchstens 10 ppm.

Bevorzugt wird das Restgas in dem Kreislauf über einen Kompressor oder ein Gebläse geführt, vorzugsweise um den Kreislauf aufrechtzuerhalten.

In einer bevorzugten Ausführungsform durchströmt das Restgas die Temperiervorrichtung nur während des Ab- und/oder Anfahrens der Anlage zur Herstellung von Salpetersäure, nicht jedoch während des stationären Betriebs der Anlage zur Herstellung von Salpetersäure.

Ist die Temperiervorrichtung ein Wärmetauscher, welcher der Restgasreinigungsanlage nachgeschaltet ist, so durchströmt das Restgas diesen Wärmespeicher bevorzugt nur während des Ab- und/oder Anfahrens der Anlage zur Herstellung von Salpetersäure, nicht jedoch während des stationären Betriebs der Anlage zur Herstellung von Salpetersäure.

In einer bevorzugten Ausführungsform durchströmt das Restgas die Temperiervorrichtung sowohl während des stationären Betriebs der Anlage zur Herstellung von Salpetersäure als auch während des Ab- und/oder Anfahrens der Anlage zur Herstellung von Salpetersäure.

Ist die Temperiervorrichtung ein Wärmetauscher, welcher der Restgasreinigungsanlage vorgeschaltet ist, oder ein Wärmespeicher, so durchströmt das Restgas bevorzugt den Wärmetauscher bzw. den Wärmespeicher sowohl während des stationären Betriebs als auch während des Ab- und/oder Anfahrens der Anlage zur Herstellung von Salpetersäure.

Wird das Restgas zeitlich vor dem Durchströmen der Restgasreinigungsanlage temperiert, erfolgen die erfindungsgemäßen Schritte (a) und (b) in zeitlicher Abfolge hintereinander.

Bevorzugt wird die Temperiervorrichtung, vorzugsweise zumindest während des Ab- und/oder Anfahrens der Anlage zur Herstellung von Salpetersäure, mit einem Medium beaufschlagt, welches geeignet ist, Wärme abzugeben.

In einer anderen bevorzugten Ausführungsform ist die Temperiervorrichtung geeignet, Wärme von einem Medium aufzunehmen, zu speichern und bei Bedarf wieder abzugeben.

Bevorzugt wird das Medium aus der Anlage zur Herstellung von Salpetersäure abgeführt und/oder aus externen Quellen zugeführt.

Bevorzugt umfasst das Medium Hochdruckdampf.

Ein weiterer Aspekt der Erfindung betrifft eine Vorrichtung zur Verminderung der Konzentration von NOₓ -Stickoxiden in Restgas, welches während des Ab- und/oder Anfahrens einer Anlage zur Herstellung von Salpetersäure anfällt, umfassend die mit der Anlage zur Herstellung von Salpetersäure in Wirkverbindung stehenden Komponenten:
- (A) eine Temperiervorrichtung, welche konfiguriert ist zum Temperieren des Restgases während des Ab- und/oder Anfahrens der Anlage zur Herstellung von Salpetersäure, und
- (B) eine Restgasreinigungsanlage, welche konfiguriert ist zum Vermindern der Konzentration von NOₓ -Stickoxiden in dem Restgas, welches mit der Temperiervorrichtung temperiert wurde;
- (C) eine Gasumleitungsvorrichtung, welche nach der Restgasreinigungsanlage angeordnet ist und konfiguriert ist zum Umleiten des Restgases in die Temperiervorrichtung; und
- (D) eine Leitung, welche nach der Temperiervorrichtung angeordnet ist und welche konfiguriert ist zum Rückführen des Restgases in einem Kreislauf unter Durchströmung der Temperiervorrichtung und der Restgasreinigungsanlage, wobei die
   Temperiervorrichtung in der erfindungsgemäßen Vorrichtung ein Wärmespeicher ist.

Bevorzugt umfasst die erfindungsgemäße Vorrichtung die zusätzlichen mit der Anlage zur Herstellung von Salpetersäure in Wirkverbindung stehenden Komponenten:
(E) eine Messvorrichtung, welche konfiguriert ist zum Bestimmen der Konzentration an NOₓ-Stickoxiden im Restgas; und/oder
(F) einen Kompressor und/oder ein Gebläse.

Bevorzugt wird das Restgas, welches über die Leitung (D) geführt wird, wenigstens zum Teil in einem Kreislauf rückgeführt.

Bevorzugt werden mindestens 10 Vol.-% des Restgases über Leitung (D) in einem Kreislauf rückgeführt, bevorzugter mindestens 20 Vol.-%, mindestens 30 Vol.-%, mindestens 40 Vol.-%, mindestens 50 Vol.-%, mindestens 60 Vol.-%, mindestens 70 Vol.-%, mindestens 80 Vol.-%, mindestens 90 Vol.-%, mindestens 99 Vol.-%. Bevorzugt wird Restgas vollständig über Leitung (D) in einem Kreislauf rückgeführt wird.

Bevorzugt wird das Restgas, welches über die Leitung (D) geführt wird, unter Durchströmung von Teilen der Anlage zur Herstellung von Salpetersäure, der Temperiervorrichtung und der Restgasreinigungsanlage in einem Kreislauf rückgeführt. Bevorzugt wird das Restgas, welches über die Leitung (D) geführt wird, der Leitung, die im stationären Betrieb die NOₓ-Stickoxide vom Brenner zur Absorptionskolonne leitet, zugeführt, und durchströmt bevorzugt ebenso die Absorptionskolonne, die Temperiervorrichtung und die Restgasreinigungsanlage.

Bevorzugt sind der Kompressor oder das Gebläse (F) nach der Restgasreinigungsanlage angeordnet und konfiguriert zum Ausblasen der Restgase durch einen Kamin.

In einer anderen bevorzugten Ausführungsform wird das Restgas im Kreislauf über den Kompressor oder das Gebläse (F) geführt, um den Kreislauf aufrechtzuerhalten.

Erfindungsgemäß ist die Temperiervorrichtung der erfindungsgemäßen Vorrichtungein Wärmespeicher, welcher konfiguriert ist zum Speichern von Wärme aus dem Restgas während des stationären Betriebs der Anlage zur Herstellung von Salpetersäure, und welcher konfiguriert ist zum Abgeben von Wärme an das Restgas während des Ab- und/oder Anfahrens der Anlage zur Herstellung von Salpetersäure.

Erfindungsgemäß ist die Temperiervorrichtung der erfindungsgemäßen Vorrichtung ein Wärmespeicher, welcher vor oder nach der Restgasreinigungsanlage angeordnet ist und welcher konfiguriert ist zum Speichern von Wärme aus dem Restgas während des stationären Betriebs der Anlage zur Herstellung von Salpetersäure, und welcher konfiguriert ist zum Abgeben von Wärme an das Restgas während des Ab- und/oder Anfahrens der Anlage zur Herstellung von Salpetersäure.

Bevorzugt wird die erfindungsgemäße Vorrichtung entsprechend dem erfindungsgemäßen Verfahren verwendet.

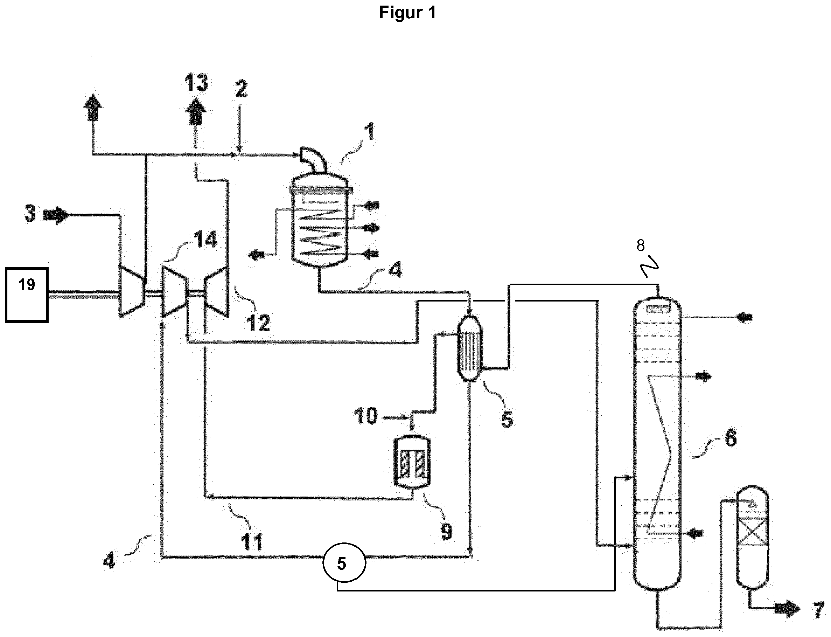

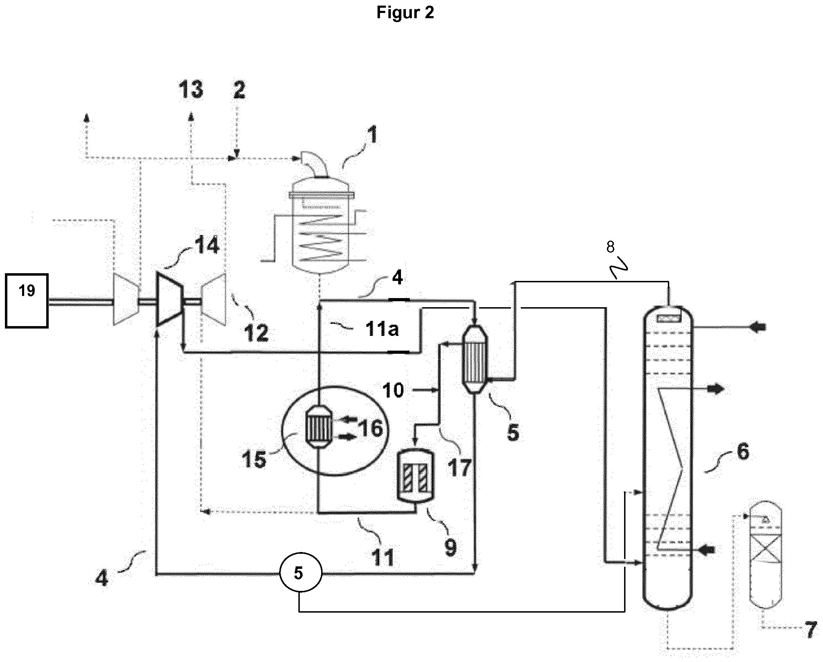

Figuren 1 bis 4 illustrieren schematisch und beispielhaft das erfindungsgemäße Verfahren zur Herstellung von Salpetersäure, sindjedoch nicht einschränkend auszulegen. Figur 1 zeigt eine herkömmliche Verfahrensführung, Figuren 2 bis 4 illustrieren das erfindungsgemäße Verfahren.

Figur 1 zeigt ein vereinfachtes Schema einer Anlage zur Herstellung von Salpetersäure im stationären Betrieb. Bei dieser werden, wie in der Salpetersäureherstellung üblich, bevorzugt in einem Brenner (1), der mit Ammoniak (2) und Luft (3) gespeist wird, NOₓ-Stickoxide (4) erzeugt. Diese NOₓ-Stickoxide (4) werden bevorzugt über einen oder mehrere Wärmetauscher (5) (die nicht sämtlich gezeigt sind), angetrieben durch den Kompressor (14), durch die Absorptionskolonne (6) geleitet, um Salpetersäure (7) zu erzeugen. Das Restgas, das die NOₓ-Stickoxide enthält (8), tritt aus der Absorptionskolonne (6) aus und wird bevorzugt über verschiedene Wärmetauscher und/oder Verflüssiger (5) auf eine Temperaturgebracht, die bevorzugt einen optimalen Abbau von NOₓ-Stickoxiden in der Restgasreinigungsanlage (9) gewährleistet. Dabei ist beispielhaft eine Einspeisung von Ammoniak (10) in die Restgasreinigungsanlage (9) vorgesehen. Das so aufgereinigte Restgas (11) gelangt im stationären Betrieb über die Gasturbine (12) an die Umgebung.

Normalerweise würde beim gezielten oder durch eine Störung bedingten Abfahren der Anlage der Druck in der Anlage nach und nach absinken. Weiterhin würde sich bei fortschreitender Entspannung durch fallende Wärme zwangsläufig bei Erreichen der Grenztemperatur die Restgasreinigungsanlage (9) abstellen.

In Figur 2 ist eine erfindungsgemäße Verschaltungsvariante dargestellt, wie der Prozess des effektiven Abbaus von NOₓ-Stickoxiden beim Ab- und/oder Anfahren der gesamten Anlage zur Herstellung von Salpetersäure aufrechterhalten werden kann. Das Schema zeigt eine Anlage zur Herstellung von Salpetersäure mit integriertem zusätzlichem Wärmetauscher, der der Restgasreinigungsanlage nachgeschaltet ist und bevorzugt erst beim Ab- und/oder Anfahren mit einem Wärme enthaltenden Medium beaufschlagt und mit NOₓ-Stickoxid-haltigem Restgas durchströmt wird.

Um keine erhöhte Konzentration von NOₓ-Stickoxiden im Restgas am Austritt der Abgasleitung (13) zu erhalten, wird das aufgereinigte Restgas (11) bevorzugt nicht mehr an die Umgebung abgegeben, sondern über den zusätzlichen Wärmetauscher (15) geleitet, der dann vorzugsweise mit Hochdruckdampf (16) beaufschlagt wird. Dabei handelt es sich bevorzugt um Hochdruckdampf, der bevorzugt an anderer Stelle im Salpetersäureherstellungsprozess anfällt. Um hervorzuheben, dass es sich bei diesem Gerät, um die erfindungsgemäße Verfahrensführung handelt, wurde der erfindungsgemäße Wärmetauscher (15) mittels einer Ellipse hervorgehoben. Das so erhitzte Restgas (11a) wird anschließend bevorzugt wieder an geeigneter Stelle in den Salpetersäureherstellungsprozess zurückgeführt. Hier wird vorgeschlagen, das erhitzte Restgas (11a) in die Rohrleitung des Gasstroms der NOₓ-Stickoxide (4), die unter Normalbedingungen im Brenner (1) erzeugt werden, zurückzuführen, so dass die Restgase schließlich erneut über die Leitung (17) der Restgasreinigungsanlage (9) zugeführt werden. Diese Kreislaufführung, die über den Kompressor (14) aufrechterhalten wird, erfolgt bevorzugt so lange, bis die Konzentration an NOₓ-Stickoxiden im Restgas so weit vermindert ist, dass der Zugang zur Abgasleitung (13) wieder geöffnet wird und das Restgas über die Abgasleitung (13) an die Umgebung abgegeben werden kann, ohne dass dabei die NOₓ-Stickoxide beim Austritt sichtbar sind.

Alternativ zum Kompressor kann der Kreislaufbetrieb auch über ein Gebläse (nicht gezeigt) aufrechterhalten werden. Dies stellt sicher, dass die Kreislaufführung auch dann noch funktioniert, wenn der Betrieb des Kompressors gestört ist.

Beim Wiederanfahren der Anlage wird die oben beschriebene Kreislaufführung des entstehenden Restgases bevorzugt solange aufrechterhalten, bis der normale Betriebsdruck und die normalen Betriebstemperaturen wieder erreicht sind, so dass die unterstützende Wärme-übertragende Wirkung des zusätzlichen Wärmetauschers (15) nicht mehr notwendig ist, um die Konzentration an NOₓ-Stickoxiden im Restgas auf ein nicht mehr sichtbares Minimum zu reduzieren. Ist dieser Zustand erreicht, wird der Wärmetauscher (15) bevorzugt außer Betrieb genommen und die aufgereinigten Restgase (11) werden bevorzugt wieder auf direktem Wege über die Abgasleitung (13) an die Umgebung abgegeben.

Entsprechend dem erfindungsgemäßen Verfahren durchströmt das Restgas (11) beim Ab- und/oder Anfahren der Anlage zur Herstellung von Salpetersäure zunächst die Restgasreinigungsanlage (9), wird in einem Kreislauf geführt und in der erfindungsgemäßen Temperiervorrichtung temperiert, die bevorzugt ein Wärmetauscher (15) ist. Bevorzugt wird das Restgas auf eine Temperatur im Bereich von 300 bis 550°C temperiert. Bevorzugt durchströmt das Restgas die Temperiervorrichtung nur beim Ab- und/oder Anfahren der Anlage zur Herstellung von Salpetersäure. Das temperierte Restgas durchströmt erneut die Restgasreinigungsanlage (9), in der bevorzugt die Konzentration an NOₓ-Stickoxiden reduziert wird. Bevorzugt durchströmt das Restgas im Kreislauf die Temperiervorrichtung und die Restgasreinigungsanlage (9). In einer anderen bevorzugten Ausführungsform durchströmt das Restgas im Kreislauf die Temperiervorrichtung, die Restgasreinigungsanlage (9) und zusätzlich auch die Anlage zur Herstellung von Salpetersäure.

Teile der Anlage, die im Vergleich zum stationären Betrieb (Figur 1) nicht in Betrieb sind, sind dünn und gestrichelt dargestellt.

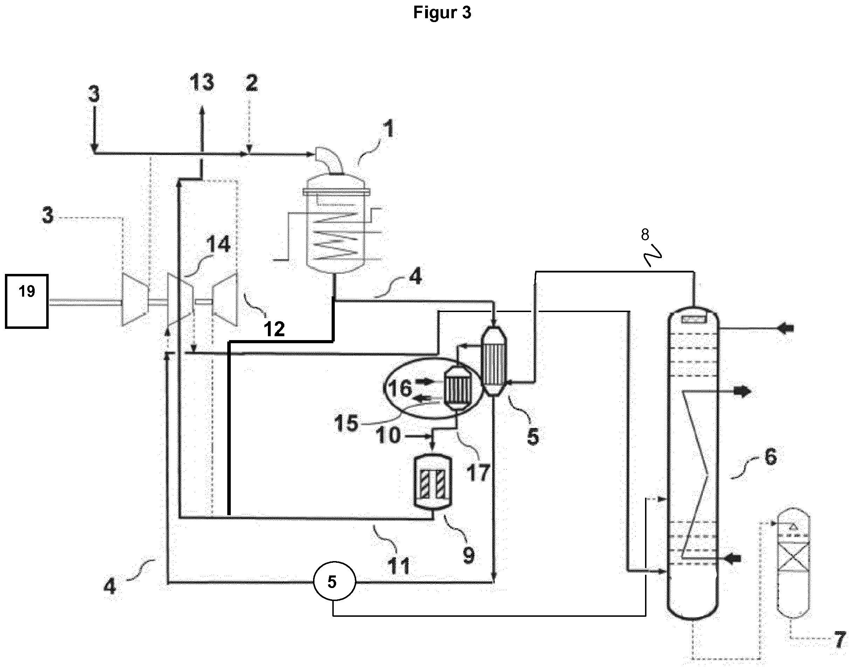

Figur 3 zeigt ein vereinfachtes Schema einer Anlage zur Herstellung von Salpetersäure mit integriertem zusätzlichem Wärmetauscher, der der Restgasreinigungsanlage vorgeschaltet ist und beim Ab- und/oder Anfahren mit einem Wärme enthaltenden Medium beaufschlagtwird. DieserWärmetauscherwird mittels einer Ellipse hervorgehoben. Teile der Anlage, die im Vergleich zum stationären Betrieb (Figur 1) nicht in Betrieb sind, sind dünn und gestrichelt dargestellt.

Die Anlage zur Herstellung von Salpetersäure, die in Figur 3 dargestellt ist, wird beim Ab- und/oder Anfahren in ähnlicher Weise betrieben wie in Figur 2 beschrieben. Im Unterschied zur dort illustrierten Anlage wird hier auch im stationären Betrieb der erfindungsgemäße Wärmetauscher (15) von Restgasen (8) durchströmt, wobei der Wärmetauscher (15) bevorzugt jedoch nicht mit einem Wärme-enthaltenden Medium (16) beaufschlagt wird und somit im stationären Betrieb keine Funktion hat. Erst beim Ab- und/oder Abfahren der Anlage wird der Wärmetauscher (15) mit einem Wärme enthaltenden Medium beaufschlagt und sorgt dafür, dass das Restgas, das über die Leitung (17) in die Restgasreinigungsanlage (9) gelangt, eine ausreichende hohe Temperatur hat, damit der Abbau der NOₓ-Stickoxide gewährleistet wird. Bei diesem Prozess wird das Restgas bevorzugt mit Hilfe der Kaminwirkung durch die Anlage und die Restgasreinigungsanlage (9) geblasen. Bevorzugt sind zur Aufrechterhaltung dieser Funktion keine Kompressoren erforderlich. Die Kaminwirkung kann gegebenenfalls über ein Gebläse (nicht gezeigt) verstärkt werden. Die aufgereinigten Restgase entweichen abschließend über die Abgasleitung (13).

Beim Wiederanfahren der Anlage wird der Betrieb des Wärmetauschers (15) bevorzugt solange aufrechterhalten, bis der normale Betriebsdruck und die normalen Betriebstemperaturen wieder erreicht sind, so dass die unterstützende Wärme-übertragende Wirkung des zusätzlichen Wärmetauschers (15) nicht mehr notwendig ist, um die Konzentration an NOₓ-Stickoxiden im Restgas auf ein nicht mehr sichtbares Minimum zu reduzieren. Ist dieser Zustand erreicht, wird der Wärmetauscher bevorzugt (15) außer Betrieb genommen, indem die Zufuhr des Wärme enthaltenden Mediums (16) abgestellt wird. Alternativ ist es auch möglich, die Zufuhr des Wärme enthaltenden Mediums (16) auch im stationären Betrieb der Anlage zu nutzen, sollte sich dies vorteilhaft auf den Prozess auswirken.

Entsprechend dem erfindungsgemäßen Verfahren wird das Restgas (8) beim Ab- und/oder Anfahren der Anlage zur Herstellung von Salpetersäure in einer Temperiervorrichtung temperiert, die bevorzugt ein Wärmetauscher ist (15). Bevorzugt wird das Restgas vor Durchströmen der Restgasreinigungsanlage (9) temperiert. Bevorzugt wird das Restgas auf eine Temperatur im Bereich von 300 bis 550°C temperiert. Anschließend wird das Restgas in einer Restgasreinigungsanlage (9) behandelt. Bevorzugt wird das Temperieren des Restgases zum Abbau der Konzentration an NOₓ-Stickoxiden im Restgas in der Restgasreinigungsanlage (9) verwendet.

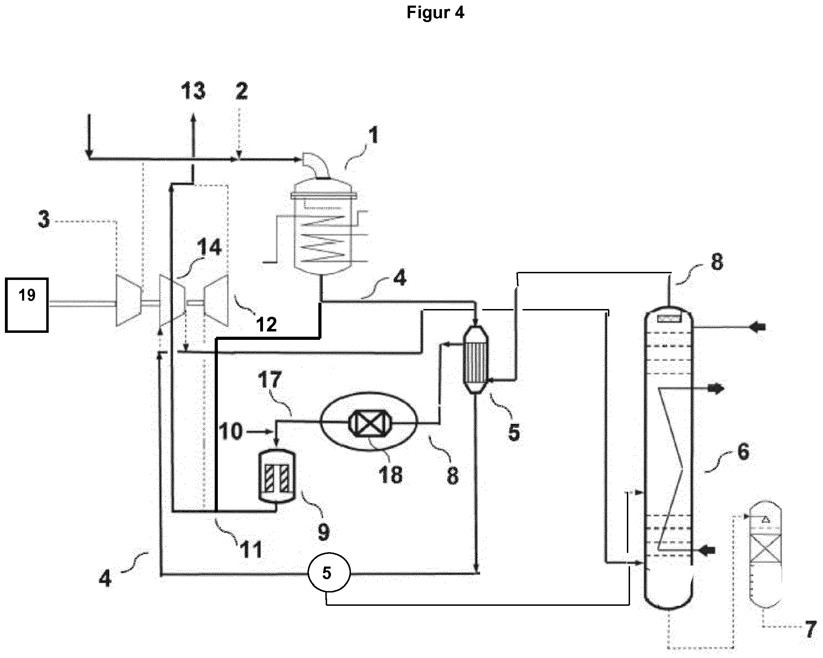

Figur 4 zeigt ein vereinfachtes Schema einer Anlage zur Herstellung von Salpetersäure mit integriertem zusätzlichem Wärmespeicher, der der Restgasreinigungsanlage vorgeschaltet ist. Dieser Wärmespeicher wird mittels einer Ellipse hervorgehoben. Teile der Anlage, die im Vergleich zum stationären Betrieb (Figur 1) nicht in Betrieb sind, sind dünn und gestrichelt dargestellt.

Die Anlage zur Herstellung von Salpetersäure, wie in Figur 4 dargestellt, wird beim An- und/oder Abfahren in ähnlicher Weise betrieben, wie in Figur 2 und Figur 3 beschrieben ist. Allerdings wird anstelle des Wärmetauschers (15) ein Wärmespeicher (18) eingesetzt. Dieser wird im stationären Betrieb mit Restgas (8) durchströmt und speichert über die Zeit einen Teil der darin enthaltenen Wärmeenergie. Beim Abfahren der Anlage ist nun so viel Energie vorhanden, dass das Restgas, das über die Leitung (17) in die Restgasreinigungsanlage (9) gelangt, eine ausreichende hohe Temperatur hat, damit der Abbau der NOₓ-Stickoxide gewährleistet ist. Bei diesem Prozess wird das Restgas bevorzugt mit Hilfe der Kaminwirkung durch die Anlage und die Restgasreinigungsanlage (9) geblasen. Zur Aufrechterhaltung dieser Funktion sind bevorzugt also keine Kompressoren erforderlich. Die Kaminwirkung kann gegebenenfalls über ein Gebläse (nicht gezeigt) verstärkt werden. Die aufgereinigten Restgase entweichen abschließend über die Abgasleitung (13).

Steht die Anlage nicht zu lange still, so dass noch ausreichend Wärmeenergie im Wärmespeicher (18) vorhanden ist, um das Restgas auf eine ausreichend hohe Temperatur zu temperieren, um einen ausreichenden Abbau von NOₓ-Stickoxiden in der Restgasreinigungsanlage (9) zu gewährleisten, kann beim Wiederanfahren der Anlage von demselben Effekt wie beim Abfahren der Anlage profitiert werden.

Entsprechend dem erfindungsgemäßen Verfahren wird das Restgas (8) beim Ab- und/oder Anfahren der Anlage zur Herstellung von Salpetersäure in einer Temperiervorrichtung temperiert, die bevorzugt ein Wärmespeicher ist (18). Bevorzugt wird das Restgas vor Durchströmen der Restgasreinigungsanlage (9) temperiert. Bevorzugt wird das Restgas auf eine Temperatur im Bereich von 300 bis 550°C temperiert. Anschließend wird das Restgas in einer Restgasreinigungsanlage (9) behandelt. Bevorzugt wird das Temperieren des Restgaseszum Abbau der Konzentration an NOₓ-Stickoxiden im Restgas in der Restgasreinigungsanlage (9) verwendet.

### Bezugszeichenliste:

- 1: Brenner
- 2: Ammoniak
- 3: Luft
- 4: NOₓ-Stickoxide
- 5: Wärmetauscher
- 6: Absorptionskolonne
- 7: Salpetersäure
- 8: Restgas, welches NOₓ-Stickoxide enthält
- 9: Restgasreinigungsanlage
- 10: Ammoniak
- 11: aufgereinigtes Restgas
- 12: Gasturbine
- 13: Abgasleitung
- 14: Kompressor
- 15: Wärmetauscher
- 16: Hochdruckdampf, Wärme-enthaltendes Medium
- 17: Leitung
- 18: Wärmespeicher
- 19: Antriebsmaschine (z.B., Elektromotor oder Dampfturbine)

## Patentansprüche

1. Verfahren zur Verminderung der Konzentration von NOₓ-Stickoxiden in Restgas (8), welches während des Ab- und/oder Anfahrens einer Anlage zur Herstellung von Salpetersäure anfällt, wobei das Verfahren folgende Schritte umfasst:
(a) Temperieren des Restgases während des Ab- und/oder Anfahrens der Anlage zur Herstellung von Salpetersäure mit einer Temperiervorrichtung; und
(b) Behandeln des in Schritt (a) temperierten Restgases in einer Restgasreinigungsanlage (9),
wobei die Temperiervorrichtung ein Wärmetauscher (15) oder ein Wärmespeicher (18) ist, **dadurch gekennzeichnet, dass** das Restgas (8) zumindest teilweise in einem Kreislauf geführt wird und dabei die Temperiervorrichtung (15, 18) und die Restgasreinigungsanlage (9) durchströmt.

2. Das Verfahren nach Anspruch 1, wobei das Restgas in dem Kreislauf über einen Kompressor (14) oder ein Gebläse geführt wird.

3. Das Verfahren nach einem der Ansprüche 1 oder 2, wobei das Restgas die Temperiervorrichtung nur während des Ab- und/oder Anfahrens der Anlage zur Herstellung von Salpetersäure durchströmt, nicht jedoch während des stationären Betriebs, welcher den Teil-, Voll- und Überlastfall, der Anlage zur Herstellung von Salpetersäure umfasst.

4. Das Verfahren nach einem der vorstehenden Ansprüche, wobei die Temperiervorrichtung mit einem Medium (16) beaufschlagt wird, welches geeignet ist, Wärme abzugeben.

5. Das Verfahren nach einem der Ansprüche 1 bis 4, wobei die Temperiervorrichtung geeignet ist, Wärme von einem Medium (16) aufzunehmen, zu speichern und bei Bedarf wieder abzugeben.

6. Das Verfahren nach einem der Ansprüche 4 oder 5, wobei das Medium (16) aus der Anlage zur Herstellung von Salpetersäure abgeführt und/oder aus externen Quellen zugeführt wird.

7. Das Verfahren nach einem der Ansprüche 4 bis 6, wobei das Medium (16) Hochdruckdampf bei einem Druck > 40 bar umfasst.

8. Das Verfahren nach einem der vorstehenden Ansprüche, wobei das Restgas in Schritt (a) auf eine Temperatur im Bereich von 200 bis 550°C temperiert wird, bevorzugter im Bereich von 300 bis 480°C, bevorzugter im Bereich von 260 bis 380°C.

9. Eine Vorrichtung zur Verminderung der Konzentration von NOₓ-Stickoxiden in Restgas (8), welches während des Ab- und/oder Anfahrens einer Anlage zur Herstellung von Salpetersäure anfällt, umfassend die mit der Anlage zur Herstellung von Salpetersäure in Wirkverbindung stehenden Komponenten:
(A) eine Temperiervorrichtung (15, 18), welche konfiguriert ist zum Temperieren des Restgases während des Ab- und/oder Anfahrens der Anlage zur Herstellung von Salpetersäure; und (B) eine Restgasreinigungsanlage (9), welche konfiguriert ist zum Vermindern der Konzentration von NOₓ-Stickoxiden in dem Restgas, welches mit der Temperiervorrichtung (15, 18) temperiert wurde;
(C) eine Gasumleitungsvorrichtung, welche nach der Restgasreinigungsanlage (9) angeordnet ist und konfiguriert ist zum Umleiten des Restgases in die Temperiervorrichtung (15, 18); und
(D) eine Leitung, welche nach der Temperiervorrichtung (15, 18) angeordnet ist und welche konfiguriert ist zum Rückführen des Restgases in einen Kreislauf unter Durchströmung der Temperiervorrichtung (15, 18) und der Restgasreinigungsanlage (9),
wobei die Temperiervorrichtung ein Wärmespeicher (18) ist, welcher konfiguriert ist zum Speichern von Wärme aus dem Restgas während des stationären Betriebs, welcher den Teil-, Voll- und Überlastfall umfasst, der Anlage zur Herstellung von Salpetersäure, und welcher konfiguriert ist zum Abgeben von Wärme an das Restgas während des Ab- und/oder Anfahrens der Anlage zur Herstellung von Salpetersäure.

10. Die Vorrichtung nach Anspruch 9, umfassend die zusätzlichen mit der Anlage zur Herstellung von Salpetersäure in Wirkverbindung stehenden Komponenten:
(E) eine Messvorrichtung, welche konfiguriert ist zum Bestimmen der Konzentration an NOₓ-Stickoxiden im Restgas; und/oder (F) einen Kompressor (14) und/oder ein Gebläse.

## Claims

1. Process for decreasing the concentration of NOₓ nitrogen oxides in residual gas (8) which is obtained during shutdown and/or start-up of a plant for preparing nitric acid, the process comprises the following steps:
(a) regulating the temperature of the residual gas during shutdown and/or start-up of the plant for preparing nitric acid with a temperature regulating device; and
(b) treating the residual gas temperature-regulated in step (a) in a residual gas purification plant (9),
wherein the temperature regulating device is a heat exchanger (15) or a heat store (18), **characterized in that** the residual gas (8) is at least partially conveyed in a circuit and flows through the temperature regulating device (15, 18) and the residual gas purification plant (9).

2. The process according to claim 1, wherein the residual gas in the circuit is conveyed via a compressor (14) or a blower.

3. The process according to any one of claims 1 or 2, wherein the residual gas flows through the temperature regulating device only during shutdown and/or start-up of the plant for preparing nitric acid, but not during steady-state operation, which comprises the partial load, full load and overload case, of the plant for preparing nitric acid.

4. The process according to any one of the preceding claims, wherein the temperature regulating device is supplied with a medium (16) which is suitable for releasing heat.

5. The process according to any one of claims 1 to 4, wherein the temperature regulating device is suitable for receiving heat from a medium (16), storing it and releasing it when required.

6. The process according to any one of claims 4 or 5, wherein the medium (16) is discharged from the plant for producing nitric acid and/or supplied from external sources.

7. The process according to any one of claims 4 to 6, wherein the medium (16) comprises high pressure steam at a pressure > 40 bar.

8. The process according to any one of the preceding claims, wherein the residual gas in step (a) is temperature-regulated to a temperature in the range of 200 to 550°C, more preferably in the range of 300 to 480°C, more preferably in the range of 260 to 380°C.

9. A device for decreasing the concentration of NOₓ nitrogen oxides in residual gas (8) which is obtained during shutdown and/or start-up of a plant for preparing nitric acid, comprising the following components which are functionally connected to the plant for preparing nitric acid:
(A) a temperature regulating device (15, 18) configured to temperature-regulate the residual gas during shutdown and/or start-up of the plant for preparing nitric acid; and (B) a residual gas purification plant (9) configured to reduce the concentration of NOₓ nitrogen oxides in the residual gas temperature-regulated by the temperature regulating device (15, 18);
(C) a gas bypass device arranged downstream of the residual gas purification plant (9) and configured to divert the residual gas into the temperature regulating device (15, 18); and
(D) a conduit which is arranged downstream of the temperature regulating device (15, 18) and which is configured for returning the residual gas to a circuit with flow through the temperature regulating device (15, 18) and the residual gas purification plant (9),
wherein the temperature regulating device is a heat store (18) configured to store heat from the residual gas during steady-state operation, which comprises the partial load, full load and overload case, of the plant for preparing nitric acid, and configured to release heat to the residual gas during shutdown and/or start-up of the plant for preparing nitric acid.

10. The device of claim 9, comprising the additional components being in operative connection with the plant for producing nitric acid:
(E) a measuring device configured to determine the concentration of NOₓ nitrogen oxides in the residual gas; and/or (F) a compressor (14) and/or a blower.

## Revendications

1. Procédé pour réduire la concentration d'oxydes d'azote NOₓ dans le gaz résiduel (8) produit pendant l'arrêt et/ou le démarrage d'une installation de production d'acide nitrique, le procédé comprenant les étapes suivantes :
(a) réguler la température du gaz résiduel pendant l'arrêt et/ou le démarrage de l'installation de production d'acide nitrique au moyen d'un dispositif de régulation de température ; et
(b) traiter le gaz résiduel régulé en température à l'étape (a) dans une installation d'épuration de gaz résiduel (9),
le dispositif de régulation de température étant un échangeur de chaleur (15) ou un accumulateur de chaleur (18), **caractérisé en ce que** le gaz résiduel (8) est guidé au moins partiellement dans un circuit et traverse ainsi le dispositif de régulation de température (15, 18) et l'installation de purification de gaz résiduel (9).

2. Procédé selon la revendication 1, dans lequel le gaz résiduel dans le circuit passe par un compresseur (14) ou une soufflante.

3. Procédé selon l'une des revendications 1 ou 2, dans lequel le gaz résiduel ne traverse le dispositif de régulation de température que pendant l'arrêt et/ou le démarrage de l'installation de production d'acide nitrique, mais pas pendant le fonctionnement stationnaire, qui comprend les cas de charge partielle, de charge totale et de surcharge, de l'installation de production d'acide nitrique.

4. Procédé selon l'une quelconque des revendications précédentes, dans lequel le dispositif de régulation de température est chargé avec un milieu (16) apte à dégager de la chaleur.

5. Procédé selon l'une des revendications 1 à 4, dans lequel le dispositif de régulation de température est apte à recevoir de la chaleur d'un milieu (16), à la stocker et à la dégager en cas de besoin.

6. Procédé selon l'une des revendications 4 ou 5, dans lequel le milieu (16) est évacué de l'installation de production d'acide nitrique et/ou est introduit à partir de sources externes.

7. Procédé selon l'une des revendications 4 à 6, dans lequel le milieu (16) comprend de la vapeur haute pression à une pression > 40 bars.

8. Procédé selon l'une quelconque des revendications précédentes, dans lequel le gaz résiduel est régulé à l'étape (a) à une température comprise entre 200 et 550°C, de préférence entre 300 et 480°C, de préférence entre 260 et 380°C.

9. Dispositif pour réduire la concentration d'oxydes d'azote NOₓ dans le gaz résiduel (8), qui est produit pendant l'arrêt et/ou le démarrage d'une installation de production d'acide nitrique, comprenant les composants en liaison fonctionnelle avec l'installation de production d'acide nitrique :
(A) un dispositif de régulation de température (15, 18) configuré pour réguler la température du gaz résiduel pendant l'arrêt et/ou le démarrage de l'installation de production d'acide nitrique ; et (B) une installation de purification de gaz résiduel (9) configurée pour réduire la concentration d'oxydes d'azote NOₓ dans le gaz résiduel qui a été régulé en température par le dispositif de régulation de température (15, 18) ;
(C) un dispositif de dérivation de gaz situé en aval de l'unité de purification de gaz résiduel (9) et configuré pour dériver le gaz résiduel dans le dispositif de régulation de température (15, 18) ; et
(D) une conduite qui est disposée en aval du dispositif de régulation de température (15, 18) et qui est configurée pour renvoyer le gaz résiduel dans un circuit en traversant le dispositif de régulation de température (15, 18) et l'installation de purification de gaz résiduel (9),
dans lequel le dispositif de régulation de température est un accumulateur de chaleur (18) qui est configuré pour accumuler de la chaleur provenant du gaz résiduel pendant le fonctionnement stationnaire, qui comprend les cas de charge partielle, de charge totale et de surcharge, de l'installation de production d'acide nitrique, et qui est configuré pour dégager de la chaleur au gaz résiduel pendant l'arrêt et/ou le démarrage de l'installation de production d'acide nitrique.

10. Dispositif selon la revendication 9, comprenant les composants supplémentaires en liaison fonctionnelle avec l'installation de production d'acide nitrique :
(E) un dispositif de mesure configuré pour déterminer la concentration en oxydes d'azote NOₓ dans le gaz résiduel ; et/ou (F) un compresseur (14) et/ou une soufflante.
